**Europäisches Patentamt**

**European Patent Office**

**Office européen des brevets**

(19)

(11) Veröffentlichungsnummer: **0 142 031**
**B1**

(12) # EUROPÄISCHE PATENTSCHRIFT

(45) Veröffentlichungstag der Patentschrift:
**07.01.87**

(51) Int. Cl.⁴: **B 65 G 53/48,** B 65 G 53/08

(21) Anmeldenummer: **84112175.9**

(22) Anmeldetag: **11.10.84**

(54) **Schüttgutaufnahmevorrichtung für einen pneumatischen Druckförderer.**

(30) Priorität: **20.10.83 DE 3338210**

(43) Veröffentlichungstag der Anmeldung:
**22.05.85 Patentblatt 85/21**

(45) Bekanntmachung des Hinweises auf die Patenterteilung:
**07.01.87 Patentblatt 87/2**

(84) Benannte Vertragsstaaten:
**DE FR GB SE**

(56) Entgegenhaltungen:
**DE - C - 741 342**
**DE - C - 2 938 626**
**US - A - 1 002 556**

(73) Patentinhaber: **CLAUDIUS PETERS AKTIENGESELLSCHAFT, Kapstadtring 1, D-2000 Hamburg 60 (DE)**

(72) Erfinder: **Zimmermann, Wilhelm, Dipl.-Ing., Götzberger Weg 70, D-2000 Hamburg 62 (DE)**

(74) Vertreter: **Glawe, Delfs, Moll & Partner Patentanwälte, Rothenbaumchaussee 58 Postfach 2570, D-2000 Hamburg 13 (DE)**

EP 0 142 031 B1

## Beschreibung

Die Erfindung betrifft eine Vorrichtung zum Aufnehmen von Schüttgut aus einem Haufwerk und dergleichen für einen pneumatischen Druckförderer mit einer schnellaufenden vertikalen Pressschnecke, die mit einem Zuförderer versehen ist und die in einem mit Druckgasdüse und Rückschlagklappe ausgestatteten, das Einlaufende der pneumatischen Förderleitung enthaltenden Druckraum mündet.

Eine solche Schüttgutaufnahmevorrichtung dient zum Schüttguttransport aus einem Haufwerk, wie z.B. aus dem Laderaum eines Schiffes, eines Güterwagons oder eines offenen Behälterfahrzeuges. Soweit derartige Transportmittel keine eigenen Entlade- und Fördervorrichtungen haben, sind zur Entladung bzw. Entleerung Fremdvorrichtungen erforderlich, die im allgemeinen von oben an das Schüttgut herangeführt werden müssen, da dieses seitlich oder von unten meistens nicht zugänglich ist. Der Abtransport von der Aufgabestelle her verläuft im allgemeinen senkrecht oder schräg nach oben.

Bekannt sind auf diesem Gebiet Sauganlagen für grosse Leistungen und Schüttgutaufnahmevorrichtungen der eingangs genannten Art für kleinere und mittlere Entladeleistungen (DE-PS 741 342, DE-PS 29 38 626). Der Nachteil dieser Aufnahmevorrichtungen besteht darin, dass sie nicht die technisch mögliche Förderleistung über einen längeren Zeitraum kontinuierlich erreichen können, so dass sie unwirtschaftlich im Betrieb sind.

Die Ursache für diesen Nachteil liegt darin, dass es bisher nicht gelungen ist, das Schüttgut aus einem Haufwerk kontinuierlich mit annähernd gleicher Leistung in die Aufnahmevorrichtung einzuschleusen, durch die das Schüttgut in den pneumatischen Druckförderer gefördert wird. Die Aufnahmevorrichtung selbst arbeitet nach dem Prinzip des Schneckenförderers. Es ist bekannt, dass bei derartigen Förderern im Leerlauf, bei Teillast und bei Schüttgütern mit hohem Gashaltevermögen ständig ein Teil des Fördergases des pneumatischen Druckförderers, unerwünscht als Falschgasstrom, der Förderrichtung der Schnecke entgegen zum Aufgabepunkt des Schüttguts hinströmt. Dieser sogenannte Gasrückschlag behindert zusätzlich das störungsfreie Nachfliessen des Schüttgutes an der Aufgabestelle. Es hat sich gezeigt, dass die beste Zufördervorrichtung wirkungslos bleibt, wenn durch den Gasrückschlag das Schüttgut am Eintreten in den Bereich der Pressschnecke gehindert wird.

Während die vorbekannte Vorrichtung (DE-PS 741 342) lediglich rotierende Zuförderarmkreuze bzw. Zuförderscheiben aufweist, die das Schüttgut zum Einlaufende der Pressschnecke hinschieben, enthält die andere vorbekannte Aufnahmevorrichtung (DE-PS 29 38 626) nach aussen hin abgedeckte Zufördererflügel, die mit getrenntem Antrieb versehen sind und das Schüttgut zum Pressschneckeneinlauf hinpressen. Eine weitere Verbesserung liegt bei dieser Vorrichtung darin, dass nicht nur eine, sondern zwei oder mehrere Schnecken in das Einlaufgehäuse des pneumatischen Druckförderers fördern. Der Nachteil dieser Aufnahmevorrichtung liegt darin, dass gerade in dem Zuförderer, der besonders wenig fördert, aus dem gemeinsamen Gehäuse die rückströmende Gasmenge besonders gross ist, was zu erheblicher Staubentwicklung bei der Schüttgutentnahme führt. Hier ist eine möglichst gleichmässige Beschickung aller Zuförderer erforderlich, um eine befriedigende Förderleistung zu erzielen, was im praktischen Betrieb bei dieser Vorrichtung jedoch nicht sicherzustellen ist.

Der Erfinder hat nun erkannt, dass die verhältnismässig geringe Durchschnittsleistung derartiger Aufnahmevorrichtungen in erster Linie auf den störenden Gasrückschlag im Einlaufbereich der Zuförderer zurückzuführen ist, der gleichzeitig zu erheblichen Belästigungen der Umwelt infolge starker Staubentwicklung führt.

Die Aufgabe der Erfindung besteht darin, die eingangs genannte Aufnahmevorrichtung so zu verbessern, dass der störende Gasrückschlag in der Pressschnecke wesentlich verringert wird.

Die erfindungsgemässe Lösung besteht darin, dass mindestens ein Zuförderer als seitlich von der Pressschnecke angeordneter Schneckenzuförderer ausgebildet ist und die Förderrichtung der Pressschnecke nach unten gerichtet ist.

Es ist zwar bekannt, einen Zuförderer seitlich neben einer Pressschnecke anzuordnen (US-PS 1 002 556). Hierbei wird aber lediglich in eine trichterförmige Öffnung der Zuförderschnecke eingegebenes Material auf ein höheres Niveau gefördert, wo es dann in die eigentliche Pressschnecke hineinfällt, die waagrecht angeordnet ist. Beim Anmeldungsgegenstand soll aber nicht einfach das Material zunächst auf das höhere Niveau der Pressschnecke angehoben werden. Es soll vielmehr die ganz andere Aufgabe zu lösen sein, Material aus einem Haufwerk zu entnehmen, was mit besonderen Problemen wie Förderung von einer Böschung, Förderung aus einem fast leeren Behälter und möglicherweise teilweiser Verfestigung des Materials verbunden ist. Dabei muss die Aufnahmevorrichtung auch verhältnismässig klein sein, damit sie zum Beispiel durch eine Schiffsluke eingeführt werden kann. Gegenüber der zuletzt genannten vorbekannten Fördereinrichtung besteht nun nicht einfach eine Abwandlung darin, dass die Pressschnecke senkrecht gestellt wird, um so kleinere Horizontalabmessungen zu erhalten. Vielmehr ist es das Verdienst der Erfindung, eine vorteilhafte Aufnahmevorrichtung geschaffen zu haben, obwohl diese doch den Nachteil zu haben scheint, dass das nach oben zu fördernde Schüttgut durch die Pressschnecke entgegen der gewünschten Förderrichtung zunächst nach unten bewegt wird.

Es wird also nicht, wie dies bisher der Fall war, vor der Pressschnecke ein Zuförderer vorgesehen, der in derselben Richtung wie die Pressschnecke fördert. Es wird vielmehr seitlich neben der Pressschnecke ein im wesentlichen von der Pressschnecke unabhängiger Zuförderer in Form eines Schneckenförderers vorgesehen. Durch diese Zuförderer wird immer genügend Schüttgut an das Einlaufende der Pressschnecke gebracht, so dass diese stets gefüllt ist und der Gasrückschlag nicht oder zumindest nicht im störenden Umfang auftreten kann. Dass immer genügend Schüttgut an das Einlaufende der Pressschnecke verbracht werden kann, wird dadurch erreicht, dass der Zuförderer unabhängig von der Pressschnecke ist, also insbesondere leicht seine Förderleistung verändert werden kann, um diese dem Bedarf der Pressschnecke anzupassen. Der Zuförderer ist dabei nicht, wie dies bisher der Fall war, als verhältnismässig flaches Element ausgebildet (um die Gesamthöhe der Aufnahmevorrichtung nicht zu gross werden zu lassen). Er ist vielmehr ein vollwertiger Schnekkenförderer. Um die Bauhöhe der Gesamtvorrichtung nicht zu gross werden zu lassen, fördert der Zuförderer das Material, wie dies immer notwendig ist, nach oben, während die Pressschnecke selbst das Material nach unten fördert und in das Einlaufende des Druckförderers drückt.

Damit auch bei ungünstigen Bedingungen immer genügend Schüttgut zum Einlaufende der Pressschnecke verbracht werden kann, ist zweckmässigerweise vorgesehen, dass mehr als ein Schneckenzuförderer vorgesehen ist.

Dabei ist die Anordnung insbesondere symmetrisch. Als besonders vorteilhaft haben sich zwei diametral gegenüberstehende, V-förmig angeordnete Schneckenzuförderer erwiesen. Werden diese noch gegenläufig betrieben, so wird durch die Zuförderer normalerweise kein Drehmoment auf die Gesamtaufnahmevorrichtung ausgeübt, so dass sich die Vorrichtung, die vielleicht nur an einem Kranhaken und -seil hängt, nicht in unerwünschtem Masse dreht. Ein weiterer Vorteil der V-förmigen Anordnung besteht darin, dass das Schüttgut im wesentlichen an einem Punkt aufgenommen wird und nicht an zwei verschiedenen Stellen, die in einem Abstand voneinander angeordnet sind. Auf diese Weise wird auch z.B. an Böschungen eines Haufwerkes nur ein verhältnismässig kleines Drehmoment auf die Aufnahmevorrichtung ausgeübt.

Als besonders zweckmässig hat es sich erwiesen, wenn das Abgabeende der Zufördererschnekke und das Einlaufende der Pressschnecke durch ein nach aussen abgeschlossenes Gehäuse verbunden sind, das mit einer Gasablassöffnung versehen ist. Auf diese Weise wird sichergestellt, dass tatsächlich alles von den Zuförderern nach oben gefördertes Material in die Pressschnecke gelangt. Sollte sich wegen gelegentlicher doch auftretender Gasrückschläge der Druck im Gehäuse in unerwünschter Weise erhöhen, so kann die Luft oder das andere Gas durch die Gasablassöffnung abgelassen werden.

Insbesondere kann die Gasablassöffnung mit Filtereinrichtung verbunden sein, damit kein Staub in die Umgebung gelangt. Die Gasablassöffnung kann aber auch mit einem Überdruckventil verbunden sein, insbesondere einer Überdruckklappe, über die das Gas bei Erreichen eines vorgesehenen Überdrucks abgelassen wird. Damit das staubhaltige Gas nicht stört, wird es dabei zweckmässigerweise in die Nähe des Aufnahmeendes der Zufördererschnecken geleitet.

Um immer die richtige Schüttgutmenge am Einlaufende der Pressschnecke zu haben, wird zweckmässigerweise die Förderleistung mindestens einer der Schneckenzuförderer automatisch geregelt, z.B. über den Druck am Einlaufende der Pressschnecke und/oder über die Stromaufnahme des Antriebsmotors der Pressschnecke. Es kann sich auch als zweckmässig erweisen, zusätzlich oder alleine die Leistung der Pressschnecke automatisch zu regeln.

Die gesamte Schüttgutaufnahmevorrichtung wird an einem Gestell oder in einem Gehäuse befestigt, das oben mit einem Haken, einer Öse oder sonstigen Befestigungseinrichtungen versehen sein kann. Unten sind an der Aufnahmevorrichtung Dorne, Bügel, Stützen, Arme oder dergleichen zweckmässigerweise vorgesehen, um das Aufnahmeende der Zufördererschnecken vor Beschädigungen zu schützen und um den Unfallschutz sicherzustellen.

Wenn der Durchmesser der (des) Schneckenzuförderer(s) im Aufnahmebereich grösser ist als in den übrigen Bereichen, wird das Schüttgut besonders wirkungsvoll aufgenommen.

Die Erfindung wird im folgenden beispielsweise unter Bezugnahme auf die beigefügten Zeichnungen anhand einer vorteilhaften Ausführungsform beschrieben. Es zeigen in schematischer, teilweise geschnittener Darstellung:

Fig. 1 eine Seitenansicht der erfindungsgemässen Aufnahmevorrichtung;

Fig. 2 einen Schnitt entlang der Linie II-II von Fig. 1; und

Fig. 3 einen Schnitt entlang der Linie III-III von Fig. 1.

Die Aufnahmevorrichtung weist einen Pressschneckenförderer 1 und zwei Schneckenzuförderer 2, 3 auf. Der Pressschneckenförderer 1, der im wesentlichen vertikal angeordnet ist, weist eine Pressschnecke 4 auf, die in einem aus mehreren Teilen bestehenden, durch Flansche 5 verbundenen Gehäuse 6 angeordnet ist. Die Flansche 5 dienen dabei der Zerlegung des Pressschneckenförderers 1, wenn Verschleissteile ausgewechselt werden sollen oder sonstige Reparaturen durchgeführt werden müssen.

Die Pressschnecke 4 ist mit Lagern gelagert, von denen zwei bei 7 dargestellt sind. Ausserdem ist am oberen Ende des Aufnahmeförderers eine Dichtung 8 vorgesehen. Oberhalb der Pressschnecke befindet sich noch der Antriebsmotor 9 für diese Pressschnecke.

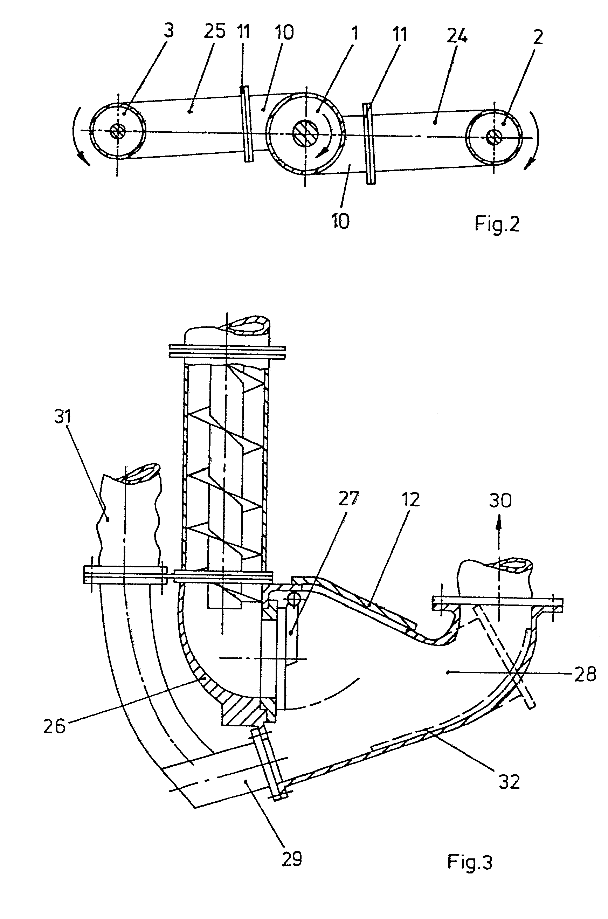

Im oberen Bereich ist der Pressschneckenförderer 1 mit zwei Einlaufenden 10 mit Flanschen 11 versehen, durch die das zu fördernde Material eingeführt wird. Am unteren Ende befindet sich das Auslaufgehäuse 12, das in Fig. 3 näher dargestellt ist.

Seitlich sind in V-förmiger Anordnung die beiden Schneckenzuförderer 2, 3 an diametral gegenüberliegenden Stellen am Pressschneckenförderer 1 befestigt. Die Zufförderschnecken 13, 14 ragen

dabei nach unten aus den Gehäusen 15, 16 der Schneckenzuförderer 2, 3 heraus, um dort das Schüttgut aufzunehmen. An diesen Aufnahmestellen haben die Zuförderschnecken einen grösseren Durchmesser als im übrigen Teil. An diesen Stellen sind auch noch Leitbleche 17, 18 oder dergleichen vorgesehen, um das Aufnehmen des Schüttgutes zu erleichtern. Ausserdem ist am Aufnahmeende ein oder mehrere nach unten gerichtete(r) Dorn (Dorne) 19 vorgesehen, mit dem die Vorrichtung, die an einem nicht gezeigten Haken aufgehängt werden kann, auf das Schüttgut bzw. einen Boden eines Schüttgutbehälters aufgesetzt werden kann und durch den die Zuförderschnecken 13, 14 vor Beschädigung geschützt werden.

Die Zuförderschnecken 13, 14 sind durch Lager gelagert, die bei 20 angedeutet sind. Ausserdem sind sie an ihrem oberen Ende durch Dichtungen 21 gegen das Gehäuse 15 bzw. 16 abgedichtet. Angetrieben werden sie durch Motoren 22, 23, die sich am oberen Ende der Schneckenwellen befinden.

Die Gehäuse 15, 16 weisen an ihrem oberen Ende einen Rohransatz 24 bzw. 25 als Abgabeenden auf, dessen mit einem Flansch versehene Enden an den Flanschen 11 der entsprechenden Rohransätze des Pressschneckenförderers befestigt werden können.

Die Drehrichtungen der beiden Zuförderschnecken 13, 14 sind zueinander entgegengesetzt, wie dies in Fig. 2 durch Pfeile angedeutet ist. Die Förderrichtung der Zuförderschnecken ist dabei nach oben gerichtet, während die Förderrichtung der Pressschnecke 4 nach unten gerichtet ist.

Ab Abgabeende der Pressschnecke 4 wird das Schüttgut durch einen gekrümmten Gehäuseteil 26 seitlich abgelenkt. Dieser Gehäuseteil ist mit einer Rückschlagklappe 27 (Fig. 3) versehen, die durch Fremdkraft oder Schwerkraft in der geschlossenen Stellung gehalten wird und durch das herausgepresste Schüttgut geöffnet wird. Das Schüttgut gelangt in einen Druckraum 28, in dem es durch den Gasstrom aus dem Düsenkasten 29 in Richtung des Pfeiles 30 aus dem Gehäuse 12 heraus und weggefördert wird. Für diesen Zweck ist der Düsenkasten 29 mit einer entsprechenden Druckgasleitung 31 verbunden. Durch eine als Verschleissteil ausgebildete Wandauskleidung 32 kann noch verhindert werden, dass durch das mit Druckgas pneumatisch geförderte Schüttgut die Wand des Gehäuses 12 an besonders kritischen Stellen abgenutzt wird.

Die Wirkungsweise der Vorrichtung ist die folgende.

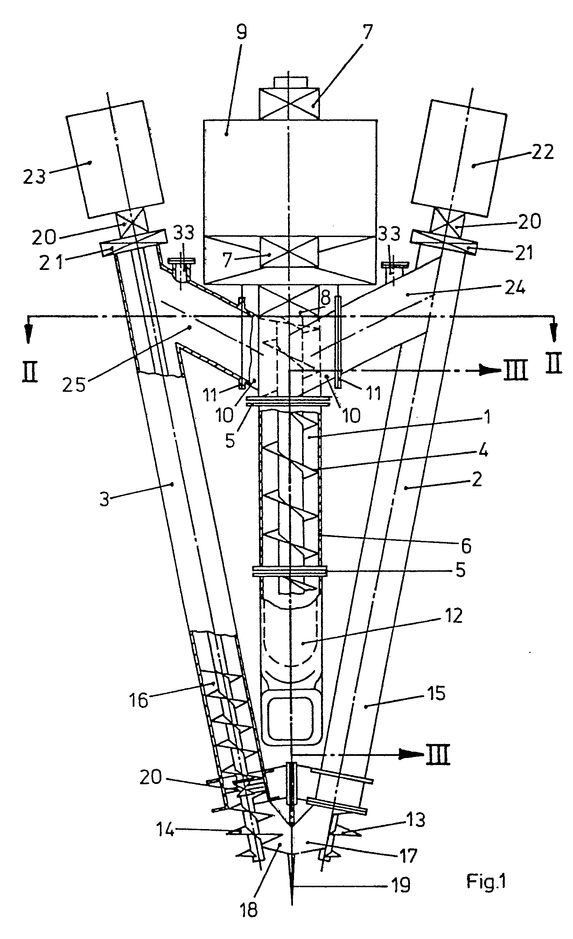

Die Vorrichtung wird mit Hilfe eines Krans oder dergleichen in der in Fig. 1 gezeigten vertikalen Stellung auf das aufzunehmende Schüttgut abgesenkt. Durch die Zuförderschnecken 13, 14 wird das Material über die Abgabeenden 24 bzw. 25 und das Einlaufende 10 der Pressschnecke gefördert. Dabei wird die Fördergeschwindigkeit wenigstens einer der Zufördererschnecken automatisch so geregelt, dass sich am Einlaufende der Pressschnecke 4 immer die richtige Materialmenge befindet. Durch die Pressschnecke 4 wird dann das Material nach unten über die Rückschlagklappe 27 in den Druckraum 28 des Druckförderers verbracht, von wo es durch den Druckgasstrom in Richtung des Pfeiles 30 weggefördert wird. Ein Gasrückschlag, wie er bei geöffneter Rückschlagklappe 27 auftreten kann (diese Klappe wird während des Betriebes immer wieder geöffnet), wird wirkungsvoll dadurch verhindert, dass der Pressschneckenförderer immer mit genügend Material gefüllt ist, da seinem Einlaufende immer die ausreichende Materialmenge zugeführt wird.

Gelangt — was sich auch mit der erfindungsgemässen Vorrichtung nicht vollständig verhindern lassen wird — Druckgas des pneumatischen Druckförderers aus dem Druckraum 28 des Druckförderers in Rückwärtsrichtung durch den Pressschneckenförderer 1 an dessen Einlassende, so kann dieses Gas durch entsprechende mit Flanschen versehene Stutzen als Gasablassöffnung 33 abgelassen werden. Diese Druckablassstutzen 33 können entweder mit Filtern oder mit einem Überdruckventil, insbesondere einer Überdruckklappe verbunden sein, deren Überdruck dann vorzugsweise auch noch einstellbar ist. Falls das Druckgas keine Luft ist, die nach Entstaubung in die Atmosphäre abgelassen werden soll, kann das Gas insbesondere an das Aufnahmeende der Schüttgutaufnahmevorrichtung zurückgeleitet werden, da es hier am wenigsten stört.

Die automatische Regelung der Förderleistung der Pressschnecke hat den Vorteil, dass die Zuförderschnecken und die Pressschnecken sich besser aufeinander abstimmen lassen. Die Drehzahl der Pressschnecke kann zu diesem Zweck materialabhängig, d.h. schüttgutabhängig, geregelt werden. Es ist auch möglich, dass die Zuförderschnecken konstant fördernd und die Pressschnecke in Abhängigkeit von der Aufnahmeleistung ihres Antriebsmotors gesteuert wird. Es ist weiterhin denkbar, dass beide Schnecken — die Pressschnecke und die Zuförderschnecken — unabhängig voneinander, drehzahlveränderlich, d.h. mit unterschiedlicher Förderleistung gefahren werden.

## Patentansprüche

1. Vorrichtung zum Aufnehmen von Schüttgut aus einem Haufwerk und dergleichen für einen pneumatischen Druckförderer mit einer schnelllaufenden vertikalen Pressschnecke (4), die mit einem Zuförderer (2, 3) versehen ist und die in einen mit Druckgasdüse (29) und Rückschlagklappe (27) ausgestatteten, das Einlaufende der pneumatischen Förderleitung enthaltenden Druckraum (28) mündet, dadurch gekennzeichnet, dass mindestens ein Zuförderer (2, 3) als seitlich von der Pressschnecke (4) angeordneter Schneckenzuförderer ausgebildet ist und die Förderrichtung der Pressschnecke (4) nach unten gerichtet ist.

2. Vorrichtung nach Anspruch 1, dadurch gekennzeichnet, dass mehr als ein Schneckenzuförderer (2, 3) vorgesehen ist.

3. Vorrichtung nach Anspruch 2, dadurch gekennzeichnet, dass zwei diametral gegenüberstehende, V-förmig angeordnete Schneckenzuförderer (2, 3) vorgesehen sind.

4. Vorrichtung nach einem der Ansprüche 1 bis 3, dadurch gekennzeichnet, dass das Abgabeende (24, 25) der Zufördererschnecke (2, 3) und das Einlaufende (10) der Pressschnecke (4) durch ein nach aussen abgeschlossenes Gehäuse verbunden sind, das mit einer Gasablassöffnung (33) versehen ist.

5. Vorrichtung nach Anspruch 4, dadurch gekennzeichnet, dass die Gasablassöffnung (33) mit Filtereinrichtungen verbunden ist.

6. Vorrichtung nach Anspruch 4, dadurch gekennzeichnet, dass die Gasablassöffnung (33) mit einem Überdruckventil, insbesondere einer Überdruckklappe verbunden ist.

7. Vorrichtung nach einem der Ansprüche 1 bis 6, dadurch gekennzeichnet, dass die Förderleistung der Pressschnecke automatisch geregelt wird.

8. Vorrichtung nach einem der Ansprüche 1 bis 7, dadurch gekennzeichnet, dass die Förderleistung mindestens einer der Schneckenzuförderer (2, 3) automatisch geregelt ist.

9. Vorrichtung nach einem der Ansprüche 1 bis 8, dadurch gekennzeichnet, dass der Durchmesser der Schneckenzuförderer (2, 3) im Aufnahmebereich grösser ist als in den übrigen Bereichen.

## Claims

1. Apparatus for receiving loose material from a pile and the like for a pneumatic pressure conveyor with a high-speed vertical pressure worm (4), which is provided with a supply conveyor (2, 3) and which opens into a pressure chamber (28) equipped with a compressed gas nozzle (29) and non-return valve (27) and containing the inlet end of the pneumatic conveying pipe, characterised in that at least one supply conveyor (2, 3) is constructed as worm supply conveyor located at the side of the pressure worm (4) and the conveying direction of the pressure worm (4) is downwards.

2. Apparatus according to claim 1, characterised in that more than one worm supply conveyor (2, 3) is provided.

3. Apparatus according to claim 2, characterised in that two diametrically opposed worm supply conveyors (2, 3) are provided, which are arranged in a V-shape.

4. Apparatus according to one of claims 1 to 3, characterised in that the discharge end (24, 25) of the supply conveyor worm (2, 3) and the inlet end (10) of the pressure worm (4) are connected by a housing which is closed on the outside, which is provided with a gas outlet opening (33).

5. Apparatus according to claim 4, characterised in that the gas outlet opening (33) is connected to filtering devices.

6. Apparatus according to claim 4, characterised in that the gas outlet opening (33) is connected to a pressure-relief valve, in particular a pressure-relief flap valve.

7. Apparatus according to one of claims 1 to 6, characterised in that the conveying capacity of the pressure worm is regulated automatically.

8. Apparatus according to one of claims 1 to 7, characterised in that the conveying capacity of at least one of the worm supply conveyors (2, 3) is regulated automatically.

9. Apparatus according to one of claims 1 to 8, characterised in that the diameter of the worm supply conveyors (2, 3) in the receiving region is greater than in the remaining regions.

## Revendications

1. Dispositif pour le prélèvement de matières en vrac à partir d'un tas de minerai abattu ou similaires pour un transporteur pneumatique, comprenant une vis sans fin à pression verticale à grande vitesse (4) qui est munie d'un alimentateur (2, 3) et qui débouche dans une chambre de pression (28) contenant l'extrémité d'entrée de la tuyauterie de transport pneumatique et équipée d'une tuyère à gaz sous pression (29) et d'un clapet antiretour (27), caractérisé en ce qu'au moins un alimentateur (2, 3) est réalisé sous forme d'alimentateur à vis sans fin, disposé latéralement par rapport à la vis à pression (4), et en ce que le sens de transport de la vis à pression (4) est dirigé vers le bas.

2. Dispositif selon la revendication 1, caractérisé en ce qu'il est prévu plus d'un alimentateur à vis sans fin (2, 3).

3. Dispositif selon la revendication 2, caractérisé en ce qu'il est prévu deux alimentateurs à vis sans fin (2, 3) disposés en V et diamétralement opposés l'un à l'autre.

4. Dispositif selon l'une quelconque des revendications 1 à 3, caractérisé en ce que l'extrémité de sortie (24, 25) de chacun des alimentateurs à vis sans fin (2, 3) et l'extrémité d'entrée (10) de la vis sans fin à pression (4) sont reliées par un carter fermé vers l'extérieur qui est muni d'un orifice d'échappement de gaz (33).

5. Dispositif selon la revendication 4, caractérisé en ce que l'orifice d'échappement de gaz (33) est raccordé à des dispositifs de filtration.

6. Dispositif selon la revendication 4, caractérisé en ce que l'orifice d'échappement de gaz (33) est raccordé à une soupape de sûreté, en particulier à un clapet de surpression.

7. Dispositif selon l'une quelconque des revendications 1 à 6, caractérisé en ce que le débit de transport de la vis sans fin à pression est réglé automatiquement.

8. Dispositif selon l'une quelconque des revendications 1 à 7, caractérisé en ce que le débit de transport de l'un au moins des alimentateurs à vis sans fin (2, 3) est réglé automatiquement.

9. Dispositif selon l'une quelconque des revendications 1 à 8, caractérisé en ce que le diamètre des alimentateurs à vis sans fin (2, 3) dans la région de prélèvement est plus grand que dans les autres régions.

Fig.1

Fig.2

Fig.3